# EUROPÄISCHE PATENTANMELDUNG

(11) **EP 1 247 768 A1**
(43) Veröffentlichungstag der Anmeldung: **09.10.2002**
(21) Anmeldenummer: 02006297.2
(22) Anmeldetag: 20.03.2002
(51) Int. Cl.: B65G 35/00

(54) **Stauförderer für Paletten**

(30) Priorität: 05.04.2001 DE 20106015 U
(71) Anmelder: Buck, Martin, Dipl.-Ing., 27404 Zeven-Wistedt (DE)
(72) Erfinder: Buck, Martin, Dipl.-Ing., 27404 Zeven-Wistedt (DE)
(74) Vertreter: Glawe, Delfs, Moll & Partner

(57) **Zusammenfassung**

Der Stauförderer für Paletten mit einer Eingabestation und einer Abgabestation für die Paletten und dazwischen angeordnetem Stauraum für eine Reihe von Paletten, zeichnet sich dadurch aus, daß die Paletten mittels eines Wagens verfahrbar sind, der unter den Paletten verfahren werden kann und zum Anheben derselben ausgebildet ist, und daß der Wagen mittels eines Schlauches (1) angetrieben wird, der sich über den Verfahrweg erstreckt, lediglich an seinen beiden Enden befestigt ist, durch zwei mit dem Wagen verbundene Rollen (4) so zusammengedrückt wird, daß ein Fluiddurchgang an dieser Stelle im wesentlichen verunmöglicht wird, und mit einem Fluid mit einem Druck beaufschlagt wird, der in den beiden zwischen je einem Schlauchende und den Rollen (4) angeordneten Schlauchabschnitten unterschiedlich ist.

## Beschreibung

Die Erfindung betrifft einen Stauförderer für Paletten mit einer Eingabestation und einer Abgabestation für die Paletten und dazwischen angeordnetem Stauraum für eine Reihe von Paletten.

Solche Stauförderer sind vorgesehen, wenn Paletten mit ungleichmäßiger Geschwindigkeit oder Häufigkeit für den Weitertransport oder die Weiterbearbeitung angeliefert oder abgeholt werden. Ist einmal die Geschwindigkeit, mit der Paletten angeliefert werden, größer, so kann sich eine gewisse Anzahl von Paletten im Stauraum sammeln, ohne daß die Zulieferung neuer Paletten beeinflußt wird. Wird dann die Abnahmegeschwindigkeit erhöht, so verringert sich die Zahl der Paletten im Stauraum.

Die Paletten müssen dabei von der Eingabestation in Richtung auf die Abgabestation bis zu der Stelle bewegt werden, an der sie abgegeben werden bzw. wo sich bereits ein Stau von Paletten befindet. Dies kann z. B. mit geneigten Rollenförderern geschehen, auf denen die Paletten aufgrund der Schwerkraft solange weiter rollen, bis sie gegen eine andere Palette stoßen. Hierbei kann aber empfindliches Gut, das auf den Paletten gelagert ist, beschädigt werden, z. B. Glasgefäße. Dadurch entsteht nicht nur Glasbruch, sondern auch möglicherweise eine erhebliche Verschmutzung, wenn die Glasgefäße gefüllt sind. Solche Probleme könnten zwar mit angetriebenen Rollenförderern vermieden werden, die aber beträchtliche Kosten verursachen.

Die erfindungsgemäße Lösung besteht darin, ein Stauförderer der eingangs genannten Art zu schaffen, der kostengünstig herzustellen und zu betreiben ist und bei dem mit einfachen Mitteln verhindert werden kann, daß die Paletten in gefährlicher Weise aneinanderstoßen.

Die erfindungsgemäße Lösung besteht darin, daß die Paletten mittels eines Wagens verfahrbar sind, der unter den Paletten hindurch verfahren werden kann und zum Anheben derselben ausgebildet ist, und daß der Wagen mittels eines Schlauchs angetrieben wird, der sich über den Verfahrweg erstreckt, lediglich an seinen beiden Enden befestigt ist, durch zwei mit dem Wagen verbundene Rollen so zusammengedrückt wird, daß ein Fluiddurchgang an dieser Stelle im wesentlichen verunmöglicht wird, und mit einem Fluid mit einem Druck beaufschlagt wird, der in den beiden zwischen je einem Schlauchende und den Rollen angeordneten Schlauchabschnitten unterschiedlich ist.

Die Paletten werden also im Stauraum in Richtung zur Abgabestation durch einen Wagen verfahrbar, der unter den Paletten hindurch verfahren werden kann. Dadurch besteht die Möglichkeit, jede Palette, die sich irgendwo im Stauraum befindet, einzeln oder zu mehreren zu verfahren. Wenn der Wagen unter die entsprechende(n) Palette(n) gefahren ist, hebt er diese an, so daß die Palette(n) dann mit dem Wagen verfahren werden kann (können). Der Antrieb des Wagens geschieht dabei in verblüffend einfacher Weise mittels eines Schlauchs, der mit einem Druckfluid beaufschlagt wird. Dieser Schlauch erstreckt sich über den ganzen Verfahrweg. Durch zwei mit dem Wagen verbundene Rollen wird der Schlauch dabei so zusammengequetscht, daß an dieser Stelle ein Fluiddurchgang im wesentlichen unmöglich ist. Wird dann der Schlauch auf einer Seite mit einem Druckfluid beaufschlagt, so wirkt auf dieser Seite der Rollen eine Kraft, deren Gegenkraft die Zugkraft ist, die auf den Schlauch ausgeübt wird. Auf diese Weise wird der Wagen verfahren. Der Wagen bewegt sich dabei so lange, wie ein Druckunterschied in den beiden Schlauchabschnitten auf den beiden Seiten der Rollen existiert. Der Wagen kann dann z. B. so angehalten werden, daß man auch von der anderen Seite den gleichen Druck wirken läßt. Andererseits könnten Bremsen am Wagen vorgesehen sein.

Als besonders zweckmäßig hat es sich erwiesen, wenn der Schlauch ein gewebeverstärkter Schlauch ist, wie er z. B. von der Feuerwehr verwendet wird. Erstaunlicherweise ist ein solcher Schlauch in der Lage, die erheblichen Zugkräfte aufzunehmen, um beladene Paletten zu verfahren. Es hat sich gezeigt, daß mit solchen Stauförderern Paletten mit einem Gewicht von ungefähr einer Tonne mit Hilfe eines Überdrucks in einem Schlauchabschnitt von 1,5 bis 2,5 bar verfahren werden können.

Zweckmäßigerweise ist das Fluid Druckluft, die dann auf der mit dem niedrigeren Druck beaufschlagten Seite in die Atmosphäre entlüftet werden kann, so daß dieser niedrigere Druck der Atmosphärendruck ist.

Zweckmäßigerweise ist der Schlauch in einem Profil mit C-förmigem Querschnitt angeordnet. Er ist so gegen Beschädigung geschützt, kann sich, wenn er wegen der Druckbeaufschlagung seitlich ausweichen will, an den Wänden anlegen. Außerdem ist das Bedienungspersonal vor Verletzungen geschützt, falls der Schlauch reißen oder platzen sollte. Die Rollen bewegen sich dabei im C-förmigen Querschnitt und sind mit dem Wagen über eine Verbindung verbunden, die durch Schlitz des C-förmigen Querschnitts greift.

Eine besonders einfache und zweckmäßige Konstruktion des Wagens zeichnet sich dadurch aus, daß der Wagen mit Druckfluid, insbesondere Druckluft beaufschlagbare Kissen oder Schläuche zum Anheben der Paletten aufweist. Es sind also keine aufwendigen mechanischen Antriebe notwendig, damit die Palette angehoben werden kann, wenn der Wagen unter dieselbe gefahren worden ist.

Die Energieversorgung und/oder Steuerung des Wagens geschieht zweckmäßigerweise mit Hilfe einer Schleppkette. Die Energieversorgung beinhaltet dabei in erster Linie das Druckfluid, mit dem die Kissen oder Schläuche zum Anheben der Paletten versorgt werden sollen. Bei einer anderen zweckmäßigen Ausführungsform erfolgt die Energieversorgung des Wagens mit einem Akkumulator oder über die Schienen, auf denen der Wagen fährt. Diese könnten mit einer Spannung von 24 V beaufschlagt werden, die keine Gefahr für den Menschen darstellt. Die Steuerung des Wagens könnte dann durch Funksignale oder durch Signale, die durch die Schienen geleitet werden, erfolgen, so daß keine Schleppkette oder dergleichen mehr vorhanden sein muß.

Zweckmäßigerweise ist der Wagen mit Sensoren für automatische Steuerungs- und Regelungsvorgänge versehen. Mit einem Geschwindigkeitssensor könnte die Geschwindigkeit begrenzt oder z. B. bei Annäherung an eine andere Palette allmählich verringert werden. Durch photoelektrische Sensoren und andere ähnlich wirkende Sensoren könnte festgestellt werden, wo sich Paletten befinden, und ob der Wagen richtig unter eine Palette verfahren ist.

Wie erwähnt könnte die Bewegung des Wagens dadurch verlangsamt werden, daß im nicht mit Druckfluid beaufschlagten Abschnitt des Schlauchs ein Gegendruck aufgebaut wird. Zweckmäßigerweise ist der Wagen jedoch mit Bremsen versehen, die z. B. elektrisch betätigt werden.

Wenn der Wagen keine Palette trägt und von einem Ende zum anderen des erfindungsgemäßen Stauförderers schnell bewegt werden soll, muß die Luft aus dem Schlauchabschnitt, in dessen Richtung sich der Wagen bewegt, sehr schnell abgelassen werden. Zu diesem Zweck sind am Schlauch Entlüftungsventile mit zweckmäßigerweise großem Querschnitt vorgesehen.

Wenn die Eingabe- und Abgabestationen mit geneigten oder neigbaren Rollenförderern versehen sind, so wird die Eingabe und Abgabe von Paletten sehr einfach. An der Eingabestation wird mit einem Gabelstapler oder dergleichen die Palette auf die Rollen gesetzt und rollt dann automatisch weiter bis in eine Stellung, in der sie vom Wagen unterfahren, aufgenommen und wegtransportiert werden kann. Andererseits kann der Wagen an der Abgabestation die Palette auf den entsprechenden Rollenförderer aufsetzen, so daß dieser vom Stauraum weg sich in eine Stellung bewegt, in der er von einem Gabelstapler oder einem entsprechendem Handgerät aufgenommen werden kann. Die Bewegung kann dabei noch durch geeignete Bremsen verzögert werden, damit die Palette mit ihrem Inhalt nicht mit einer beträchtlichen Geschwindigkeit gegen einen Anschlag stößt.

Durch die Erfindung wird also eine sehr einfache, kostengünstige und wirksame Möglichkeit geschaffen, die Paletten im Stauraum zu bewegen. Es versteht sich von selbst, daß ein solcher Stauförderer auch mit den handelsüblichen und von den Berufsgenossenschaften vorgeschriebenen Sicherheitseinrichtungen versehen werden kann. Unfälle können vermieden werden, wenn sich die Bedienungspersonen erst in den Bereich des Stauraums und den Verfahrweg des Wagens bewegen, nachdem der Schlauch drucklos gemacht worden ist.

Die Erfindung wird im folgenden anhand einer vorteilhaften Ausführungsform unter Bezugnahme auf die beigefügten Zeichnungen beispielsweise beschrieben. Es zeigen:
- Fig. 1: in schematischer Darstellung das Antriebsprinzip des verfahrbaren Wagens der Erfindung;
- Fig. 2: eine Darstellung eines Teils des Stauraums mit dem erfindungsgemäßen Wagen; und
- Fig. 3: eine Detailansicht an einer Eingabestation für den erfindungsgemäßen Stauförderer.

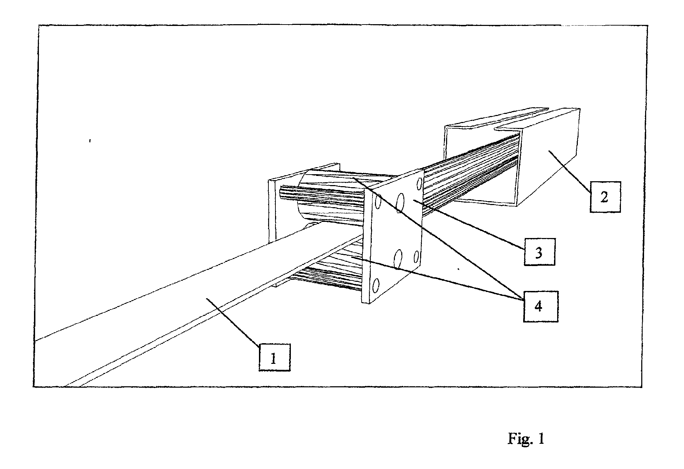

Wie dies in Fig. 1 gezeigt ist, ist ein Schlauch, insbesondere ein Gewebeschlauch 1 in einem C-förmigen Profil 2 angeordnet. In diesem C-förmigen Profil 2 kann sich eine Einrichtung 3 bewegen, die zwei drehbare Rollen 4 aufweist, die den Schlauch 1 flach zusammendrücken, wie dies links von der Einrichtung 3 gezeigt ist. Wird nun der Schlauch, wie dies im rechten Schlauchabschnitt gezeigt ist, mit Druckluft beaufschlagt, so wird die Einrichtung 3 in der Fig. 1 nach links durch den Druck verschoben. Die erforderliche Gegenkraft, eine Zugkraft, wird dabei durch den Schlauch 1 aufgebracht.

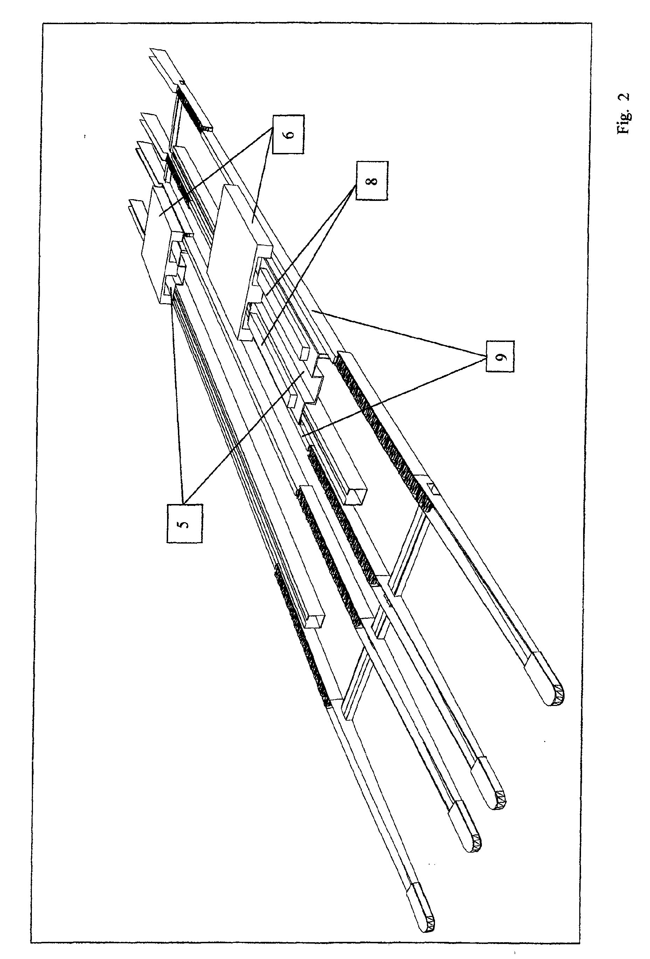

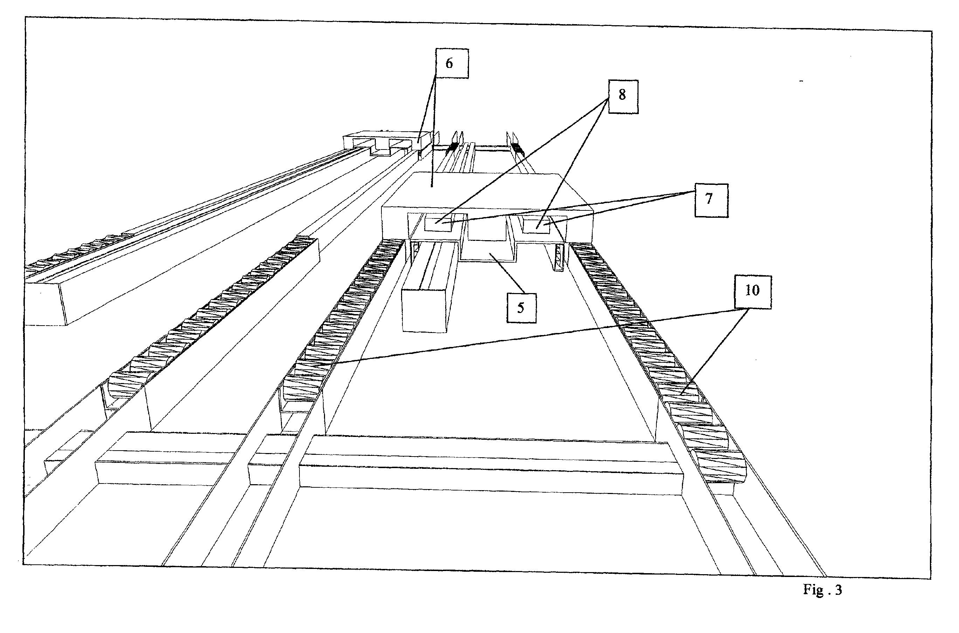

Die Einrichtung ist nun mit einem Wagen 5 verbunden, der in Fig. 2 und 3 gezeigt ist. Dieser Wagen ist unter eine Palette oder mehrere Paletten 6 verfahrbar. Er kann unter diesen Paletten 6 hindurch gefahren werden bis zu der Palette bzw. den Paletten, die verfahren werden sollen. Ist diese Position erreicht, so werden Schlauchstücke 7 mit Druckluft beaufschlagt, die in Fig. 3 zu erkennen sind. Dadurch werden obere Metallplatten 8 angehoben, die die Palette von den Schienen 9 abheben, auf denen sie vorher ruhte, so daß sie nunmehr mit dem Wagen 5 verfahren werden kann. Durch geeignete Steuermittel wird dabei erreicht, daß der Wagen mit der Palette mit stetig abnehmender Geschwindigkeit an bereits vorhandene Paletten bzw. an die Abgabestation heranfährt. Die Steuerung kann durch Sensoren erfolgen. Die Energiezufuhr kann durch eine Fig. nicht gezeigte Schleppkette erfolgen. Es wäre aber auch möglich, den Wagen 5 mit einer Batterie zu versehen, die einen Kompressor antreibt, mit dem die Schlauchstücke 8 mit Druck beaufschlagt werden können, um die Palette 6 anzuheben.

In Fig. 3 ist eine Eingabestation in den erfindungsgemäßen Stauförderer gezeigt. Mit einem Gabelstapler oder dergleichen wird die Palette auf geneigte Rollenförderer 10 aufgesetzt und rollt dann infolge der Schwerkraft in die in Fig. 3 gezeigte Stellung, wo sie vom Wagen 5 aufgenommen werden kann.

In entsprechender Weise setzt der Wagen 5 bei der Abgabestation die Palette 6 auf einen geneigten oder neigbaren Rollenförderer 10, so daß die Palette nach Absenken der Platten 8 des Wagens 5 in die Stellung rollen kann, in der sie mit einem Gabelstapler oder dergleichen entnommen werden kann. Diese Bewegung wird dabei zweckmäßigerweise durch entsprechende Bremsen verzögert, damit die Palette bzw. ihre Ladung nicht beschädigt werden kann.

## Patentansprüche

1. Stauförderer für Paletten (6) mit einer Eingabestation und einer Abgabestation für die Paletten (6) und dazwischen angeordnetem Stauraum für eine Reihe von Paletten (6), **dadurch gekennzeichnet, daß** die Paletten (6) mittels eines Wagens (5) verfahrbar sind, der unter den Paletten (6) verfahren werden kann und zum Anheben derselben ausgebildet ist, und daß der Wagen (5) mittels eines Schlauches (1) angetrieben wird, der sich über den Verfahrweg erstreckt, lediglich an seinen beiden Enden befestigt ist, durch zwei mit dem Wagen (5) verbundene Rollen (4) so zusammengedrückt wird, daß ein Fluiddurchgang an dieser Stelle im wesentlichen verunmöglicht wird, und mit einem Fluid mit einem Druck beaufschlagt wird, der in den beiden zwischen je einem Schlauchende und den Rollen (4) angeordneten Schlauchabschnitten unterschiedlich ist.

2. Stauförderer nach Anspruch 1, **dadurch gekennzeichnet, daß** der Schlauch (1) ein gewebeverstärkter Schlauch ist.

3. Stauförderer nach Anspruch 1 oder 2, **dadurch gekennzeichnet, daß** das Fluid Druckluft ist.

4. Stauförderer nach einem der Ansprüche 1 bis 3, **dadurch gekennzeichnet, daß** der Schlauch (1) in einem Profil (2) mit C-förmigem Querschnitt angeordnet ist.

5. Stauförderer nach einem der Ansprüche 1 bis 4, **dadurch gekennzeichnet, daß** der Wagen (5) mit Druckfluid beaufschlagbare Kissen oder Schläuche (8) zum Anheben der Paletten (6) aufweist.

6. Stauförderer nach einem der Ansprüche 1 bis 5, **dadurch gekennzeichnet, daß** die Energieversorgung und/oder Steuerung des Wagens (5) mit Hilfe einer Schleppkette erfolgt.

7. Stauförderer nach einem der Ansprüche 1 bis 5, **dadurch gekennzeichnet, daß** die Energieversorgung des Wagens (5) mit einem Akkumulator erfolgt.

8. Stauförderer nach einem der Ansprüche 1 bis 5, **dadurch gekennzeichnet, daß** die Energieversorgung und/oder die Steuerung des Wagens (5) über die Schienen erfolgt, auf denen der Wagen (5) fährt.

9. Stauförderer nach einem der Ansprüche 1 bis 8, **dadurch gekennzeichnet, daß** der Wagen (5) mit Sensoren für automatische Steuerungs- und Regelungsvorgänge versehen ist.

10. Stauförderer nach einem der Ansprüche 1 bis 9, **dadurch gekennzeichnet, daß** der Wagen (5) mit Bremsen versehen ist.

11. Stauförderer nach einem der Ansprüche 1 bis 10, **dadurch gekennzeichnet, daß** der Schlauch (1) Entlüftungsventile mit großem Querschnitt aufweist.

12. Stauförderer nach einem der Ansprüche 1 bis 11, **dadurch gekennzeichnet, daß** die Eingabe- und Abgabestationen mit geneigten oder neigbarem Rollenförderer (10) versehen sind.
